# EUROPEAN PATENT SPECIFICATION

(11) **EP 0 539 143 B1**
(45) Date of publication and mention of the grant of the patent: **26.03.1997**
(21) Application number: 92309551.7
(22) Date of filing: 20.10.1992
(51) Int. Cl.: G01C 21/20

(54) **Navigation system**
Navigationssystem
Système de navigation

(30) Priority: 22.10.1991 JP 274344/91; 22.10.1991 JP 274345/91; 22.10.1991 JP 274346/91
(43) Date of publication of application: 28.04.1993
(60) Divisional application: 96111500.3
(73) Proprietor: PIONEER ELECTRONIC CORPORATION, Meguro-ku Tokyo-to (JP)
(72) Inventor: Shimizu,Toshihiko c/o Pioneer Electronic Corp., Meguro-ku, Tokyo-to (JP); Araki, Morio, c/o Pioneer Electronic Corp., Kawagoe-shi, Saitama-ken (JP); Arakawa, Takeharu, c/o Pioneer Electronic Corp., Kawagoe-shi, Saitama-ken (JP); Nobe, Kenichi, c/o Pioneer Electronic Corp., Kawagoe-shi, Saitama-ken (JP)
(74) Representative: Brunner, Michael John

(56) References cited:
- EP-A- 375 818
- EP-A- 0 314 398
- EP-A- 0 323 246

## Description

The present invention generally relates to navigation systems for movable bodies, and more particularly to an on-vehicle navigation system capable of storing information concerning particular facilities located in the vicinity of the current position of the movable body and displaying and outputting such information.

There is a self-sustaining navigation system, which is a position measuring device for use in movable bodies, such as automobiles, airplanes and ships. Such a self- sustaining navigation system obtains a two-dimensional displacement (vector quantity) of the movable body by using azimuth data from an azimuth sensor and speed data from a speed sensor, and adds the two-dimensional displacement to a reference point. In this manner, the current position of the movable body can be identified. For example, the navigation system installed in an automobile operates as follows. Generally, a predetermined number of pulses are generated when a drive shaft makes one revolution. The distance between the reference point and the current position is calculated by obtaining the total number of pulses generated during the time the automobile moves the above distance. The distance is multiplied by a distance correction coefficient in order to obtain a travel distance.

There is a GPS (Global Positioning System) type navigation system as a position measuring device using satellites. The GPS type navigation system generally receives electric waves emitted from three GPS satellites or more, and identifies the position of the receiving point by referring to pseudo-distance data including a time offset of a receiver based on the distance between each GPS satellite and the receiving point, and position data indicating each GPS satellite. An information processing unit provided in the GPS type navigation system reads data on a map including the identified current position from a map data storage unit, and generates graphic data from the readout map data and the information indicating the current position. A display unit receives the graphic data and displays the map and the current position. A driver or a passenger of the automobile understands the current position on the map displayed on the display unit. There is another GPS type navigation system in which service facilities, such as a restaurant and a gas station located in the vicinity of the current position can be displayed in the form of graphic symbols in response to an instruction of the user.

However, the navigation systems as described above are originally intended to inform the user of the current position and the target position while the vehicle is traveling and provide the user with information useful for driving. Hence, it is required that the navigation systems do not affect or interfere driving. Generally, information concerning a plurality of service facilities handled in those navigation systems, such as restaurants is displayed on the display unit. If the user wishes to visit a desired one of the service facilities located in the vicinity of the current position, the user refers to information concerning the service facilities. In this case, if the information concerning the service facilities located in the vicinity of the current position is displayed in detail, the user must read the information displayed on the display unit and the driving will be affected. If a small quantity of information which does not affect the driving is displayed, the user will not obtain enough information to select a desired one of the service facilities, such as restaurants.

There is another GPS navigation system which carries out a map matching between GPS position measurement data and map data stored in a recording medium, such as CD-ROM (Compact Disk-Read Only Memory), and displays the current position and the traveling direction on the map displayed on the display unit. The map data stored in the recording medium includes, as service information, information concerning the locations of various facilities, such as restaurants and theaters. The navigation system displays not only the current position on the displayed map but also guide marks (such as heart marks) at the locations of the service facilities thereon. The guide marks help the user to go to the target service facility.

However, this GPS navigation system has a disadvantage in that, when the user wishes to obtain information concerning restaurants, all restaurants are displayed irrespective of the types of restaurants (Japanese food, western food, Chinese food and so on). It is necessary to display many guide marks on the same picture plane in order to provide the user with a larger quantity of information. However, this rather disturbs visibility and makes it difficult to obtain the necessary information from the display unit.

EP-A-0323246 discloses a vehicle navigation system in which guidance information is displayed on a map.

EP-A-0375818 discloses a vehicle navigation system in which guidance information is output through a speaker.

Accordingly, an object of the present invention is to provide a navigation system capable of easily providing the user with necessary information.

According to a first aspect of the present invention, there is provided a navigation system in which a map matching between current position data obtained by measuring a current position of a movable body and map data stored beforehand is carried out, and the current position of the movable body is displayed on a displayed map, said navigation system comprising:
first storage means for storing facility position data indicating positions of facilities, facility type data indicating types of the facilities, and guide mark data indicating guide marks denoting the facilities; characterised by:
input means for inputting desired types of facilities to be displayed on the displayed map;
second storage mean for storing display type data indicating the desired types of facilities input by said input means; and,
guide mark display control means, coupled to said first storage means and said second storage means, for reading the facility position data, which correspond to the display type data read from said second storage means, from the first storage means on the basis of the facility type data, and for displaying on the displayed map the guide marks only at positions corresponding to the facility position data read from said first storage means on the basis of the guide mark data.

Thus, data indicating the types of facilities to be displayed on the display device is stored. Using the data indicating the types of facilities, data (which shows, for example, latitudes and longitudes) indicating the locations of facilities relating to the type of facilities to be displayed is read. Then, the guide marks are displayed at the positions corresponding to the above locations on the displayed map on the basis of the readout position data and guide mark data. In this manner, only guide marks which the user wants are displayed. As a result, the visibility of display is not prevented and it is easy to obtain the necessary information from the display unit.

In this navigation system according to the present invention, it is preferable that the control device is adapted to make the image display device display character information to explain the content of the particular facilities at positions associated with the map information. Thus, even if the user fails to catch the sound information, he can still get the necessary information by the displayed character information which has the same content of the information output as the sound information.

The nature, utility, and further features of this invention will be more clearly apparent from the following detailed description with respect to preferred embodiments of the invention when read in conjunction with the accompanying drawings briefly described below.

In the drawings:
FIG. 1 is a block diagram of a embodiment of the present invention;
FIG. 2 is a diagram showing a state in which data is stored in a CD-ROM disk;
FIG. 3 is a diagram showing a state in which data is stored in the CD-ROM disk;
FIG. 4 is a diagram showing a state in which data is stored in the CD-ROM disk;
FIG. 5 is a diagram showing an external appearance of an input device and a display unit used in the present invention;
FIG. 6 is a block diagram showing the structure of a GPS receiver;
FIG. 7 is a diagram showing an example of a display state;
FIG. 8 is a diagram showing an example of a display state;
FIG. 9 is a diagram showing an example of a display state;
FIG. 10 is a diagram showing an example of a display state;
FIG. 11 is a diagram a display state in the embodiment of the present invention;
FIG. 12 is a diagram showing a display state of a menu display plane in the embodiment of the present invention;
FIG. 13 is a diagram showing the structure of a display control table according to the embodiment of the present invention; and
FIG. 14 is a diagram showing a display state in the embodiment of the present invention.

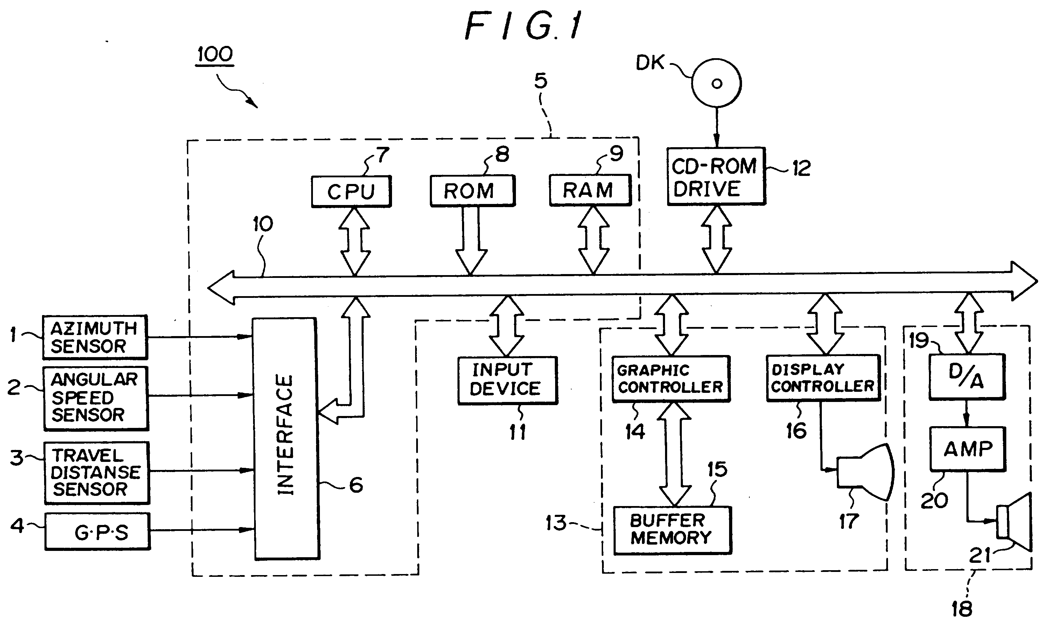

FIG. 1 is a block diagram of a basic structure in which the present invention is applied to an on-vehicle navigation system.

An on-vehicle navigation system 100 shown in FIG. 1 includes an azimuth sensor 1, an angular speed sensor 2, a travel distance sensor 3, a GPS receiver 4, a system controller 5, an input device 11, a CD-ROM drive 12, a display unit 13 and an acoustic reproduction unit 18. The azimuth sensor 1 generates azimuth data indicating the direction in which the vehicle is traveling. The angular speed sensor 2 detects an angular speed when the vehicle turns. The travel distance sensor 3 detects the number of revolutions of a shaft and integrates it to thereby generate travel distance data. The GPS receiver 4 receives an electric wave from a GPS satellite, and generates GPS measurement position data therefrom. The system controller 5 controls the whole navigation system on the basis of the azimuth data, the angular speed data, the travel distance data and the GPS position measurement data. The input device 11 is used for inputting various data pieces to the navigation system 100. The CD-ROM drive 12 reads various data pieces from a CD-ROM disk DK and outputs the readout data pieces to a bus line 10 under the control of the system controller 5. The display unit 13 displays various display data pieces under the control of the system controller 5. The acoustic reproduction unit 18 reproduces various audio data under the control of the system controller 5.

The system controller 5 includes an interface unit 6, a CPU 7, a ROM (Read Only Memory) 8, and a RAM (Random Access Memory) 9. The interface unit 6 establishes an interface with external devices. The CPU 7 controls the whole system controller 5. The ROM 8 stores control programs used for controlling the system controller 5. The RAM 9 includes a non-volatile memory, and stores various data segments. The system controller 5 is connected, via the bus line 10, to the input device 11, the CD-ROM drive 12, the display unit 13 and the acoustic reproduction unit 18.

The display unit 13 includes a graphic controller 14, a buffer memory 15, a display controller 16, and a display device 17. The graphic controller 14 controls the entire operation of the display unit 13 on the basis of control data supplied from the CPU 7 via the bus line 10. The buffer memory 15 is formed with, for example, a VRAM (Video RAM), and temporarily stores image information which can be soon displayed. The display device 17 is formed with, for example, a LCD (Liquid Crystal Display) or a CRT (Cathode Ray Tube). The display controller 16 controls the display device 17 on the basis of the image data output from the graphic controller 14.

The acoustic reproduction unit 18 includes a (Digital-to-Analog) converter 19, an amplifier 20 and a speaker 21. The D/A converter 19 converts digital audio data supplied from the CD-ROM drive 12 or the RAM 9 via the bus line 10 into an analog audio signal. The amplifier 20 amplifies the analog audio signal output from the D/A converter 19. The speaker 12 converts the amplified audio signal into acoustic vibrations.

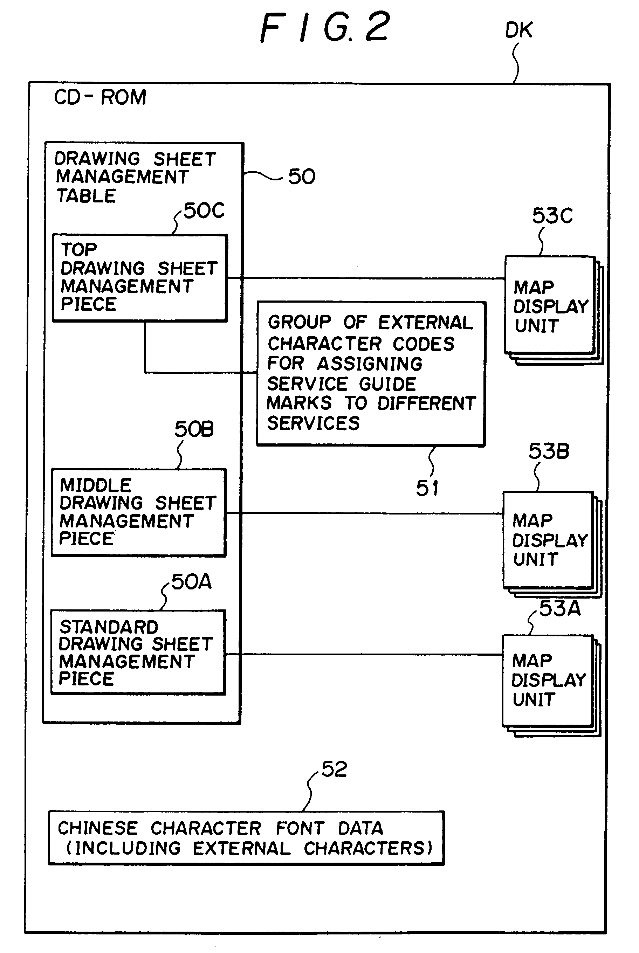

The structure of data stored in the CD-ROM disk DK will now be described with reference to FIGS. 2 through 4.

In FIG.2, the CD-ROM disk DK stores a drawing sheet management table 50, a group 51 of external-character codes for assigning service guide marks to be displayed to the different contents of services provided by particular facilities, Chinese character font data 52, and map display units 53A, 53B and 53C. Examples of the contents of services of the particular facilities are Japanese food restaurants, western food restaurants, hotels, movie theaters, leisure facilities, and so on. The drawing sheet management table 50 stores data used for managing map data for use in display. The font data 52 stores data indicating fonts of displayable characters including external characters. The map display unit data pieces 53A, 53B and 53C are respectively blocks of data segments for displaying maps on the basis of the contents of the drawing sheet management table 50.

The drawing sheet management table 50 has a standard drawing sheet management piece 50A, a middle drawing sheet management piece 50B, and a top drawing sheet management piece 50C. The standard drawing sheet management piece 50A manages data on small-scale maps showing narrow areas. The middle drawing sheet management piece 50B manages data on middle-scale maps showing middle areas. The top drawing sheet management piece 50C manages data on large-scale maps showing wide areas. A plurality of map display units 53A, ..., 53A are related to the standard drawing sheet management piece 50. A plurality of map display units 53B, ..., 53B are related to the middle drawing sheet management piece 50B. A plurality of map display units 53C, ..., 53C are related to the top drawing sheet management piece 50C. The CPU 7 (in FIG.1) refers to a plurality of map display units on the basis of the management pieces 50A, 50B and 50C, and transfers various data pieces to the RAM 9 and the buffer memory 15 in order to display the map and other information pieces.

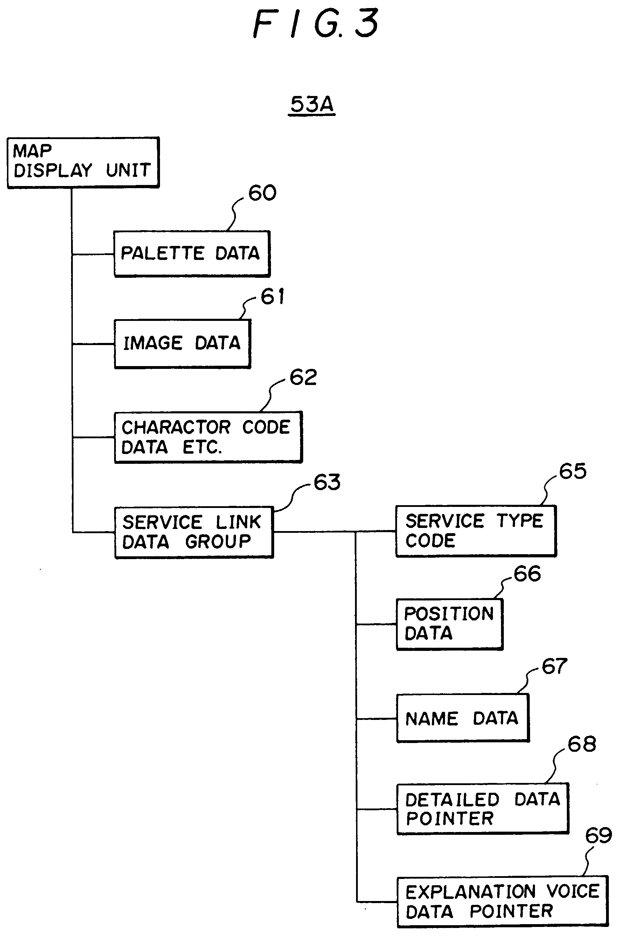

FIG. 3 shows the structure of each of the map display units 53A as an example of the structure of data in the map display units. The other map display units 53B and 53C are configured in the same manner as the map display units 53A. Each of the map display units 53A includes palette data 60, image data 61, character code data 62, a group 63 of pieces of service link data. The palette data 60 is color data for a colored display of map. The image data 61 forms an image of the displayed map. The character code data 62 indicates codes of characters to be displayed on the map display. The group 63 of pieces of service link data forms an address table that stores the addresses of storage areas formed on the CD-ROM disk DK in which service information segments showing the contents of services provided by the particular facilities are stored.

The service link data group 63 includes service type code data 65, position data 66, name data 67, a detailed data pointer 68, and an explanation voice data pointer 69. The service type code data 65 contains service type codes assigned to the different types of services provided by the particular facilities, such as leisure facilities, accommodation facilities and restaurants. The position data 66 contains data pieces respectively indicating the locations of the particular facilities. The name data 67 includes data pieces showing the names of the facilities. The detailed data pointer 68 functions as an address table showing the addresses of storage areas in the CD-ROM disk DK in which detailed information concerning the services of the facilities. The explanation voice data pointer 69 functions as an address table in which the addresses of storage areas in the CD-ROM disk DK in which voice data segments for explaining the facilities are stored.

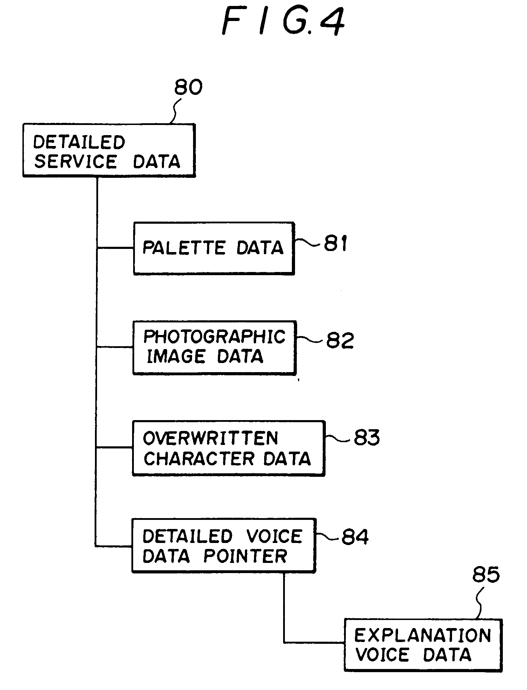

The detailed data pointer 68 (in FIG.3) stores detailed service data 80 for each of the facilities, as shown in FIG. 4 although this does not form part of the present invention. The detailed service data 80 contains palette data 81, photographic image data 82, overwritten character data 83, and a detailed voice data pointer 84. The palette data 81 is data indicating colors forming photograph data related to the respective facilities. The photographic image data 82 is image data that shows, for example, photographic images of the external appearance and the interior of the facilities, and photographic images of menus indicating recommended food. The overwritten character data 83 indicates characters (the name of the facility) superimposed on the picture plane of the display device 17. The detailed voice data pointer 84 indicates the address of a storage area on the CD-ROM disk DK in which explanation voice data 85 for a voice or acoustic message which explains the facility is stored.

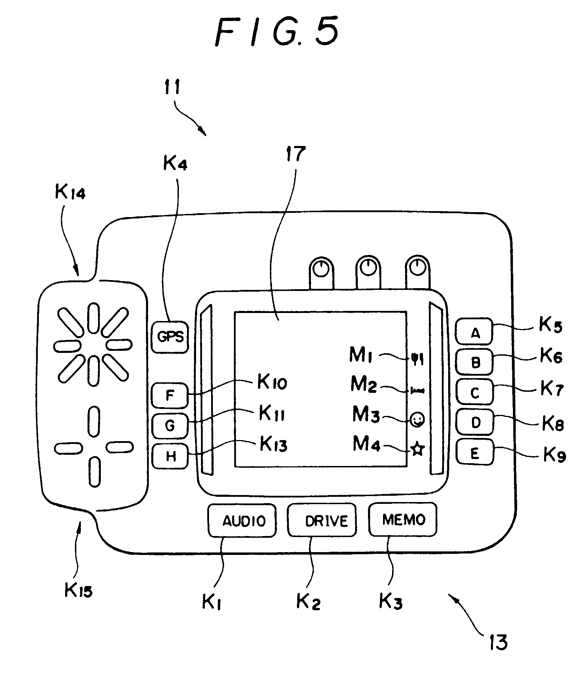

FIG. 5 shows external appearances of the input device 11 and the display unit 13. As shown in FIG. 5, the input device 11 has key switches K₁ - K₁₅. M₁ - M₄ denote menu indications of selectable service guide marks, which are information concerning the facilities related to the current picture plane. M₁ and M₂ denote restaurants and hotels, respectively, and M₃ denotes movie theaters and playhouses. M₄ denotes other facilities. The display unit 13 has the display device 17.

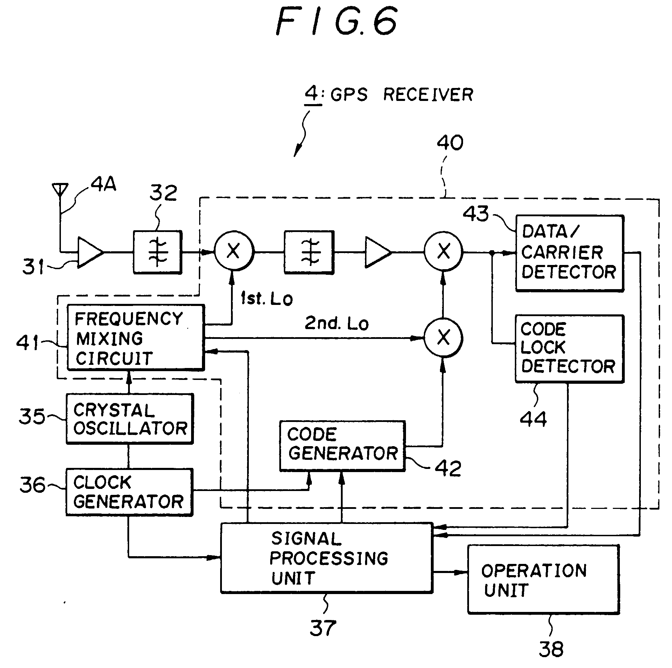

A description will now be given of the GPS receiver 4 with reference to FIG. 6. A GPS antenna 4A is coupled to a GPS receiving block 40 via a preamplifier 31 and a band-pass filter 32. A crystal oscillator 35 generates a reference frequency signal, which is a reference timing control signal of the GPS receiver 4. A clock generator 36 generates, from the reference frequency signal, a clock signal for controlling the operation timing of a signal processing unit 37. An operation unit 38 is connected to the signal processing unit 37.

The GPS receiving block 40 includes the following components. A frequency mixing circuit 41 generates a signal having the same pattern as data relating to a carrier of the GPS satellite, the position thereof, and a clock built in the GPS satellite on the basis of the reference frequency signal. A code generator 42 receives the clock signal generated by the clock generator 36, and generates a code signal having the same pattern as a distance measurement signal. A data/carrier detector 43 synchronously detects, by using the output signals of the frequency mixing circuit 41 and the code generator 42, data relating to the clock built in the GPS satellite and an orbit of the GPS satellite, and the carrier. A code lock detector 44 synchronously detects the above-mentioned distance measurement signal by using the code signal generated by the code generator 42.

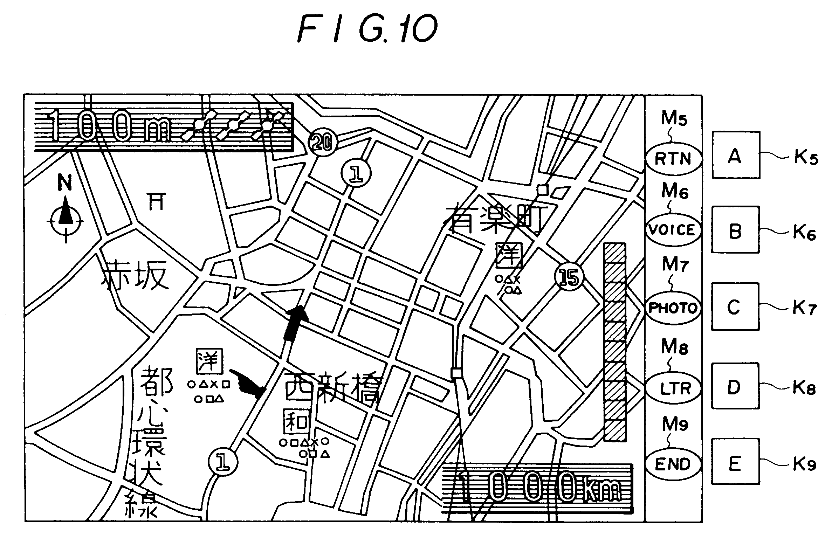

A description will now be given, with reference to FIGS. 1 through 10, of the operation of the on-vehicle navigation system according to the first embodiment of the present invention.

The system controller 5 in FIG.1, receives the azimuth data, the angular speed data, the travel distance data and the GPS position measurement data via the interface unit 6, and calculates data indicating the current position in accordance with a program stored in the ROM 8. In this case, when the GPS position measurement data has a high measurement precision, the received GPS position measurement data is used as the current position data without correcting it. When the GPS position measurement data has a low measurement precision, it is corrected using the azimuth data, the angular speed data and the travel distance data, or new current position data is generated from the azimuth data, the angular speed data and the travel distance data, without the GPS position measurement data.

After the system controller 5 calculates the current position data, it drives the CD-ROM drive 12 so that various necessary data pieces are read from the CD-ROM disk DK and transferred to the RAM 9 via the bus line 10. Further, the system controller 5 drives the CD-ROM drive 12 so that necessary map data and aerial photograph data are read from the CD-ROM disk DK and transferred to the buffer memory 15. More particularly, the system controller 5 searches the map display unit 53 in FIG.2 related to the current position data, for example, unit 53A, and identifies the address of the storage area on the CD-ROM disk DK in which the map data necessary for display is stored. Then, the system controller 5 transfers the readout map data to the buffer memory 15 via the bus line 10 and the graphic controller 14.

Subsequently, the CPU 7 executes the map matching between the current position data and the map data, and overwrites data indicating the current position into the area of the buffer memory 15 in which the map data is stored. in order to execute the map matching, for example, the latitudes and longitudes of the upper left and lower right corners of a rectangular area formed by the map data are stored and referred to.

The graphic controller 14 sequentially reads display data from the buffer memory 15 in synchronism with drawing timing, and makes the data displayed on the display device 17 via the display controller 16.

If a restaurant located in the vicinity of the current position is searched for, the user presses the key switch K₆ shown in FIG. 5.

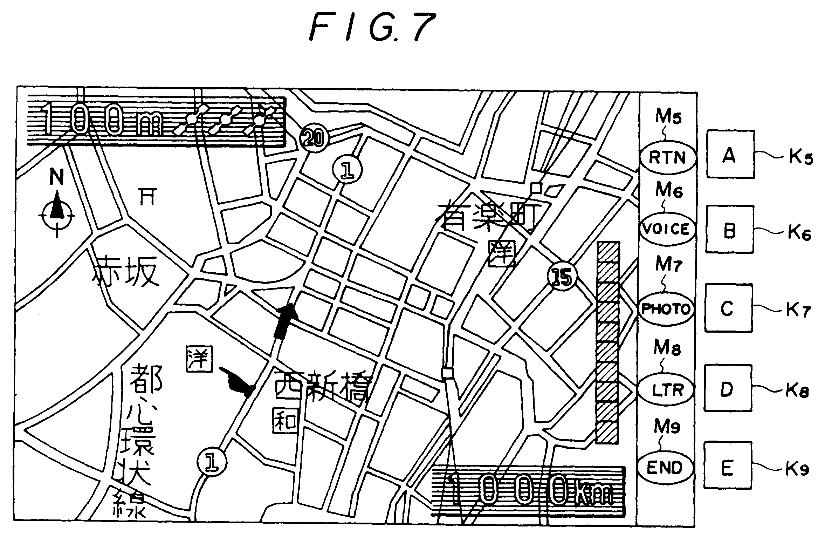

The following discussion of Figures 7 to 10 is provided for information only and does not form part of the present invention. Figures 7-10 illustrate how a more detailled display of the individual facilities may be obtained.

FIG. 7 shows an example of the picture plane of the display device 17 obtained when the key switch K₆ is pressed. In FIG. 7, the black and thick arrow indicates the current position of the vehicle and traveling direction. Chinese character 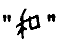 a mark indicating the position of a Japanese restaurant, and Chinese character 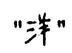 is a mark indicating the position of a western restaurant. M₅ - M₉ are graphical symbols indicating the menu of the functions provided by the key switches K₅ - K₉ in connection with the current picture plane. Each time the key switch K₅ is pressed at a time, a return operation is carried out in which a finger mark shifts from a restaurant to another restaurant. Each time the key switch K₆ is pressed, a voice operation is performed in which a voice message or an acoustic message, such as music, is provided. Such a message shows information related to the details of the restaurant indicated by the finger mark, such as the name of the restaurant, recommended food, price and distinctive characteristics of the restaurant. If the user wishes to hear information concerning another restaurant in the midst of the message, the user presses the key switches K₅ and K₆ in that order.

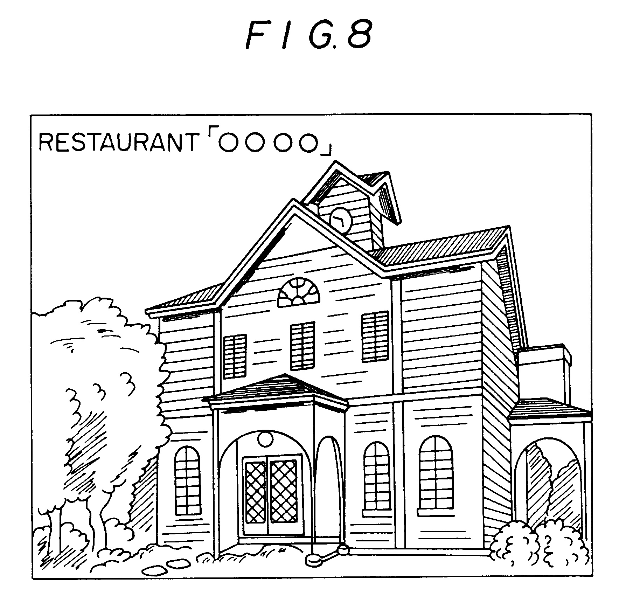

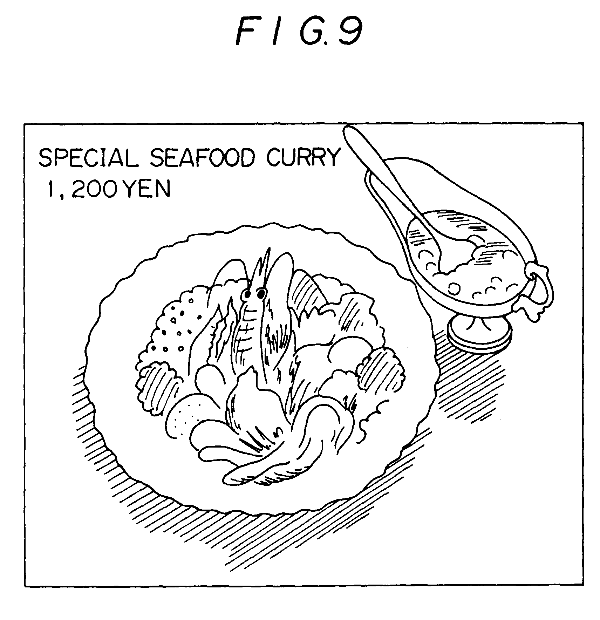

Each time the key switch K₇ is pressed in this case, a photo operation is performed in which a photograph of the external appearance of the western restaurant currently indicated by the finger mark or a recommended food thereof is displayed, as shown in FIGS. 8 and 9.

Further, when the key switch K₈ is pressed, particularly important information pieces out of the information pieces related to all the restaurants displayed on the picture plane are displayed near the marks indicating these restaurants as character information for explaining the restaurants. Thereby, it is not necessary to press the key switch K₆ again even if the user fails to catch the name of restaurant or the like. The key switch K₉ terminates the display of restaurants and returns the display unit to the initial display shown in FIG. 5.

A description will now be given of the control operation of the system controller 5.

In FIG.1, at the commencement of the control operation, the system controller 5 makes the display device 17 display the initial menu on the basis of the group 63 (in FIG.3) of the pieces of service link data. When the key switch K₆ is pressed in the state shown in FIG. 5, the system controller 5 drives the CD-ROM drive 12, and transfers necessary service information data from the CD-ROM disk DK to the buffer memory 15. More particularly, the system controller 5 searches the map display unit data 53A related to the current position data, and identifies, by looking up the detailed data pointer 68, the address of the storage area of the CD-ROM disk DK in which restaurant data that is the detailed service data 80 is stored. Then, the system controller 5 transfers the readout restaurant data to the buffer memory 15 via the bus line 10 and the graphic controller 14. Then, the graphic controller 14 sequentially reads pieces of display data from the buffer memory 15 in synchronism with drawing timing, and makes the data displayed on the display device 17 under the control of the display controller 16.

When the key switch K₆ is pressed in the state shown in FIG. 7, the system controller 5 refers to the detailed voice data pointer 84 contained in the detailed service data 80 stored in the buffer memory 15, and identifies the address of the storage area of the CD-ROM disk DK in which the explanation voice data 85 necessary for the acoustic outputting is stored. Then, the system controller 5 sends the readout explanation voice data 85 to the D/A converter 19 via the bus line 10. The amplifier 20 amplifies the analog audio signal from the D/A converter 19, and the speaker 21 generates a voice message.

When the key switch K₇ is pressed in the state shown in FIG. 7, the system controller 5 reads necessary data from the palette data 81 and the photographic image data 82 stored in the buffer memory 15, and transfers the readout data to the buffer memory 15 via the bus line 10 and the graphic controller 14. Then, the graphic controller 14 sequentially reads the pieces of data from the buffer memory 15 in synchronism with drawing timing, and makes the display device 17 display it under the control of the display controller 16.

When the key switch K₈ is pressed in the state shown in FIG. 7, the system controller 5 reads necessary data from the overwritten character data 83 stored in the buffer memory 15, and transfers the readout data to the buffer memory 15 via the bus line 10 and the graphic controller 14. Then, the graphic controller 14 sequentially reads the pieces of data from the buffer memory 15 in synchronism with drawing timing, and makes the display device 17 display it under the control of the display controller 16.

In the above examples, the marks indicating the service facilities are displayed on the picture plane on which the vehicle equipped with the navigation system is also displayed. Alternatively, key switches K₁₄ and K₁₅ shown in FIG. 5 are used for scrolling the picture planes so that picture planes showing the periphery of the current position as well as marks are scrolled. in this case, it is possible to provide the acoustic output of related information, or a character or photographic display thereof. Further, by using the key switch K₁₀ shown in FIG. 5, a display of a remote area other than the area, in which the current position is located, is called by use of a keyword of a place name, and mark information or the like is displayed thereon. In this case, it is possible to provide the acoustic output of related information, or a character or photographic display thereof. It is possible to use only one of the outputting media (for example, photograph data).

In the above examples, the voice operation is activated in response to the operation of the key switches K₅ and K₆ in that sequence. It is possible to activate the voice operation by a single key switch as a common switch. A display of characters showing information concerning the restaurants may be carried out for one part or all of the information. The character data for explanation may be superimposed on not only the map display but also the photographic display.

As described above, according to the above examples, it is possible to safely provide the user with necessary information concerning the particular facilities without having a bad influence upon driving.

A description will now be given of the present invention. The present invention has the same basic structure as the above examples except that the service guide marks used in the present invention are indicated on the map on the display.

More particularly, the CPU 7 shown in FIG. 1 refers to data related to the guide marks stored in the CD-ROM disk DK, that is, the guide mark external- character code group 51, and makes the display device 17 display the guide marks on the map in accordance with a predetermined program.

A description will now be given, with reference to FIGS. 1 through 6 and FIGS. 11 through 14, of the operation of the present invention. The system controller 5 receives the GPS measurement position data and other data pieces, and calculates the current position data in the same manner as the first embodiment. Then, the system controller 5 reads, from the CD-ROM disk DK, various data pieces, such as map data, necessary for display, and executes the map matching between the current position data and the map data. Thereafter, the system controller 5 overwrites data indicating the current position on the map data, and makes the display unit display the map with a mark indicating the current position.

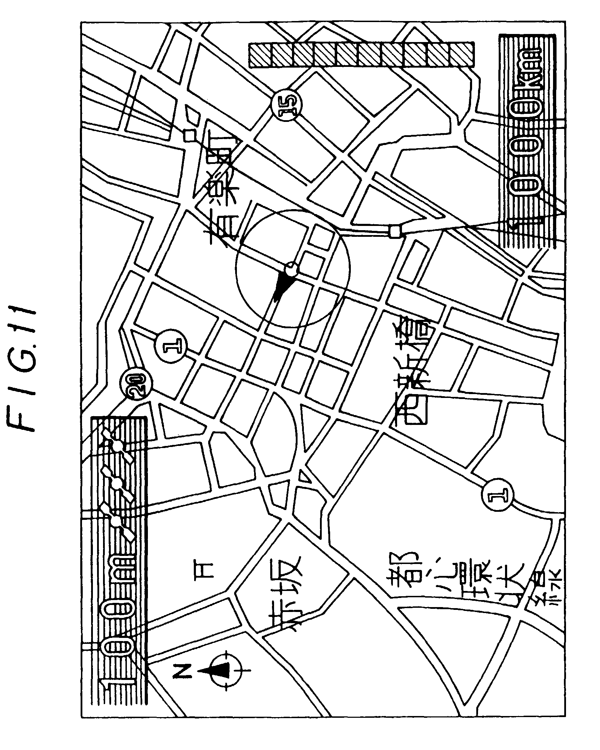

FIG. 11 shows a display including a mark (black mark of a triangular shape) indicated on the map display on the basis of the map data and the current position data. The leading end of the triangular mark indicates the traveling direction. A circle enclosing the current position mark indicates a predetermined distance (equal to, for example, 100 meters) from the current position.

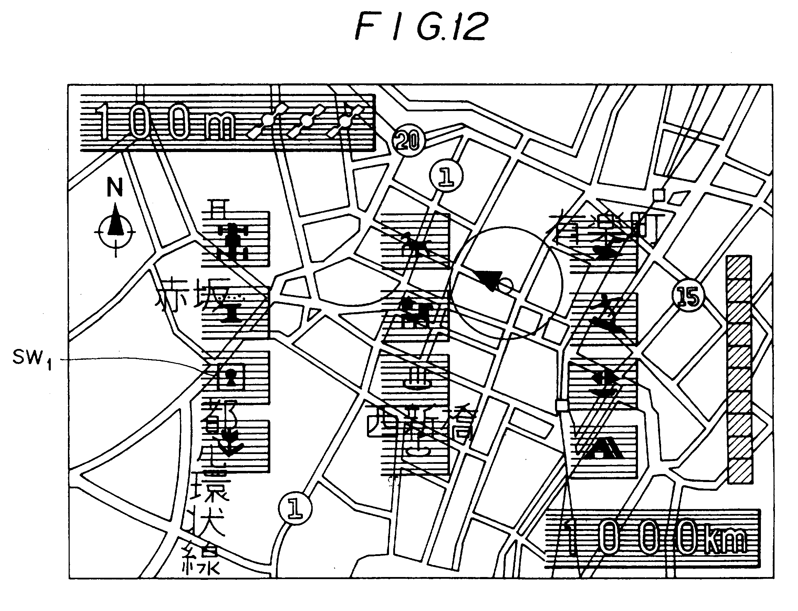

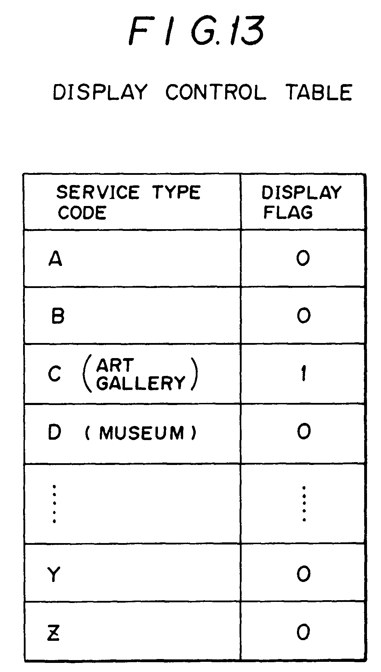

When the user operates the input device 11 to select a service menu, the CPU 7 makes the display device 17 display the service menu under the control of the graphic controller 14 and the display controller 16, as shown in FIG. 12. At the same time as the above operation, the CPU 7 transfers the group 63 of pieces of service link data to a non-volatile storage area (not shown) in the RAM 9, and creates a display control table, which shows whether or not the guide mark should be displayed for each of the service type codes. As shown in FIG. 13, the display control table has one-bit areas (indication flags) respectively relating to the service type codes. When the indication flag is equal to "1", the corresponding guide mark is displayed. When the indication flag is equal to "0", the corresponding guide mark is not displayed.

When the user selects a menu selection indication SW1 superimposed on a display of the service menu, a subsidiary menu display related to the selected service type code is displayed if such a subsidiary menu is available. If a display of the subsidiary menu is not available or all the items of the menu are selected, the CPU 7 refers to the group 63 of pieces of service link data stored in the RAM 9, and sets the indication flag related to the selected service type code to "1". More particularly, if the menu selection indication SW1 is related to services of art galleries and museums, for example, a subsidiary menu for selecting either art galleries or museums is displayed. If the user selects the art galleries, the indication flag related to art galleries is set to "1".

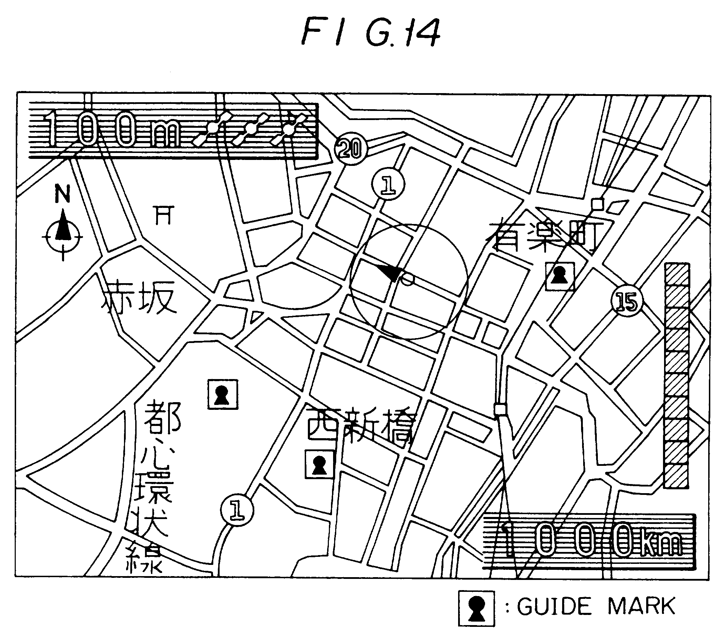

In the above-mentioned manner, desired items in the menu are selected. When this selection is completed, the CPU 7 refers to the position data 66, and makes the display device 17 display the guide marks at the position corresponding to the locations of the art galleries displayed on the display device 17. In this manner, the display device 17 creates a display as shown in FIG. 14, in which guide marks are indicated at only positions corresponding to the locations of the art galleries.

As described above, according to the present invention, it is possible to display information concerning only facilities wanted by the user and to prevent a large quantity of information from being displayed at a time. Hence, the user can easily obtain only necessary information.

The present invention is an on-vehicle navigation system. However, the present invention includes navigation systems for movable bodies, such as men, ships and airplanes. Further, the present invention includes the aforementioned GPS navigation systems but also self- sustaining type navigation systems.

In short, according to the present invention, data indicating the types of facilities (Japanese food restaurant, western food restaurant, theaters and so on) to be displayed on the display device 17 is stored. Using the data indicating the types of facilities, data (which shows, for example, latitudes and longitudes) indicating the locations of facilities relating to the type of facilities to be displayed is read. Then, the guide marks are displayed at the positions corresponding to the above locations on the displayed map on the basis of the readout position data and guide mark data. In this manner, only guide marks which the user wants are displayed. As a result, the visibility of display is not prevented and it is easy to obtain the necessary information from the display unit.

The invention may be embodied in other specific forms without departing from the essential characteristics thereof. The present embodiment is therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. A navigation system (100) in which a map matching between current position data obtained by measuring a current position of a movable body and map data stored beforehand is carried out, and the current position of the movable body is displayed on a displayed map, said navigation system comprising:
first storage means (DK) for storing facility position data indicating positions of facilities, facility type data indicating types of the facilities, and guide mark data indicating guide marks denoting the facilities;
characterised by:
input means (11) for inputting desired types of facilities to be displayed on the displayed map;
second storage means(9) for storing display type data indicating the desired types of facilities input by said input means; and,
guide mark display control means (5), coupled to said first storage means and said second storage means, for reading the facility position data, which correspond to the display type data read from said second storage means, from the first storage means on the basis of the facility type data, and for displaying on the displayed map the guide marks only at positions corresponding to the facility position data read from said first storage means on the basis of the guide mark data.

2. A navigation system according to claim 1, characterised in that said first storage means comprise a CD-ROM (DK).

## Patentansprüche

1. Navigationssystem (100), bei welchem ein Kartenvergleich zwischen aktuellen Positionsdaten, die durch Messen einer aktuellen Position eines bewegbaren Körpers erhalten wurden, und vorher gespeicherten Kartendaten ausgeführt wird, und die aktuelle Position des bewegbaren Körpers an einer angezeigten Karte angezeigt wird, wobei das Navigationssystem umfaßt:
erstes Speichermittel (DK) zum Speichern von Einrichtungs-positionsdaten, welche Positionen von Einrichtungen bezeichnen, Einrichtungsartdaten, welche Arten von Einrichtungen bezeichnen, und Leitmarkierungsdaten, welche Leitmarkierungen bezeichnen, die die Einrichtungen angeben;
**gekennzeichnet durch**:
Eingabemittel (11) zum Eingeben von Arten von Einrichtungen, die an der angezeigten Karte anzuzeigen gewünscht wird;
zweites Speichermittel (9) zum Speichern von Anzeigeart-Daten, welche die die über das Eingabemittel eingegebenen gewünschten Einrichtungsarten bezeichnen; und
mit dem ersten Speichermittel und dem zweiten Speichermittel gekoppeltes Leitmarkierungs-Anzeigesteuermittel (5) zum Auslesen der Einrichtungs-Positionsdaten aus dem ersten Speichermittel aufgrund der Einrichtungsart-Daten, welche den aus dem zweiten Speichermittel ausgelesenen Anzeigenart-Daten entsprechen, und zum Anzeigen der Leitmarkierungen nur an Positionen an der angezeigten Karte, die den aus dem ersten Speichermittel ausgelesenen Einrichtungs-Positionsdaten entsprechen, aufgrund der Leitmarkierungsdaten.

2. Navigations-System nach Anspruch 1, dadurch gekennzeichnet, daß das erste Speichermittel einen CD-ROM (DK) umfaßt.

## Revendications

1. Système de navigation (100), dans lequel une corrélation de cartes entre des données de position courante obtenues en mesurant la position courante d'un corps mobile et des données de carte mémorisées préalablement est effectuée, et la position courante du corps mobile est affichée sur une carte affichée, ledit système de navigation comprenant:
- des premiers moyens de mémorisation (DK) pour mémoriser des données de positions d'installations indiquant des positions d'installations, des données de types d'installations indiquant les types des installations, et des données de marques servant de guides représentant des marques servant de guides désignant les installations,
caractérisé par:
- des moyens d'entrée (11) pour entrer des types désirés d'installations à afficher sur la carte affichée;
- des deuxièmes moyens de mémorisation (9) pour mémoriser des données de types d'affichage indiquant les types désirés d'installations entrés par lesdits moyens d'entrée; et
- des moyens (5) de commande d'affichage de marques servant de guides, couplés auxdits premiers moyens de mémorisation et auxdits deuxièmes moyens de mémorisation pour lire des données de position d'installations qui correspondent aux données de type d'affichage lues dans lesdits deuxièmes moyens de mémorisation, dans les premiers moyens de mémorisation sur la base des données de types d'installations, et pour afficher sur la carte affichée les marques servant de guides uniquement aux positions correspondant aux données de position d'installations lues dans lesdits premiers moyens de mémorisation sur la base des données de marques servant de guides.

2. Système de navigation selon la revendication 1, caractérisé en ce que lesdits premiers moyens de mémorisation comprennent un disque CD-ROM (DK).
